(19) Europäisches Patentamt
European Patent Office
Office européen des brevets

(11) Numéro de publication: **0 055 200**
**B1**

# (12) FASCICULE DE BREVET EUROPEEN

(45) Date de publication du fascicule du brevet: **06.03.85**

(51) Int. Cl.⁴: **B 63 B 57/02,** E 21 B 43/25, E 21 B 37/06, B 01 D 17/00, C 11 D 3/43

(21) Numéro de dépôt: **81420190.1**

(22) Date de dépôt: **23.12.81**

(54) **Composition et procédé permettant de récupérer et de valoriser des produits pétroliers.**

(30) Priorité: **23.12.80 FR 8027831**

(43) Date de publication de la demande: **30.06.82 Bulletin 82/26**

(45) Mention de la délivrance du brevet: **06.03.85 Bulletin 85/10**

(84) Etats contractants désignés: **AT BE CH DE FR IT LI LU NL**

(56) Documents cités:
FR - A - 2 211 546
US - A - 3 077 929
US - A - 3 102 100
US - A - 3 436 263
US - A - 3 535 160
US - A - 3 718 586
US - A - 3 998 743

(73) Titulaire: **SOMAFER S.A., 41, rue de Ranguevaux, F-57290 Fameck (FR)**

(72) Inventeur: **Forster, Marc-André, Résidence Elysée II, F-78170 La Celle Saint Cloud (FR)**

(74) Mandataire: **Vanlaer, Marcel et al, PECHINEY 28, rue de Bonnel, F-69433 Lyon Cédex 3 (FR)**

EP 0 055 200 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention est relative à une composition et à un procédé mettant en oeuvre ladite composition, qui permettent de récupérer les boues qui s'accumulent dans les récipients de stockage et de transport de produits pétroliers et de les valoriser. Elle peut aussi s'appliquer à des poches d'hydrocarbures qu'il s'agit de rendre exploitables.

L'homme de l'art sait que, dans les récipient de stockage ou de transport de produits pétroliers tels que pétrole brut, fuel lourd ou léger, slop, s'accumulent au cours du temps, des boues plus ou moins visqueuses constituées de dérivé d'hydrocarbures lords ou de leur émulsion avec l'eau et qu'il est difficile d'éliminer tel quel par pompage ou autre moyen mécanique.

Il en résulte une perte importante de matière première exploitable, une réduction progressive des capacités de ces récipients et une augmentation corrélative des frais de stockage et de transport des produits pétroliers et la nécessité, malgré tout, si on ne veut pas condamner l'utilisation de ces récipients, de procéder périodiquement à un traitement particulier pour éliminer ces résidus.

D'autre part, on connaît les difficultés pour vidanger ou exploiter certains récipients, ou capacités, ou poches, en raison de la viscosité importante des produits qu'ils contiennent. De façon classique, l'opération de récupération est réalisée en tentant de noyer avec de l'eau chaude et des hydrocarbures chauds, la masse de boues de manière à en assurer la dissolution ou le ramollissement ou la mise en suspension. L'abaissement de la viscosité des boues permet alors leur pompage et leur transfert.

Ce procédé est lent, car la capacité de dissolution des hydrocarbures vis-à-vis de cette masse assez compacte est relativement faible, ce qui cause une immobilisation prolongée des récipients, une dépense en énergie de chauffage et un coût de main d'oeuvre relativement élevés.

De plus, un tel procédé ne peut s'appliquer à la totalité de la masse des hydrocarbures lourds car, à partir d'un certain niveau de celle-ci, il se produit à l'aspiration des pompes de vidange, un phénomène de cavitation qui libre des gaz dans le volume vide de la capacité du récipient ou de la poche, gaz qu'une simple étincelle peut faire exploser.

Aussi, est-il nécessaire, pour achever la vidange du récipient, d'intervenir manuellement et d'utiliser généralement de l'eau comme moyen de mise en suspension, afin de permettre une manipulation à l'aide de raclettes et de pousser ainsi la boue vers des manches d'aspiration pour pouvoir remplir des capacités portables.

Cette intervention s'effectue dans de très mauvaises conditions d'hygiène et de sécurité pour le personnel chargé de son exécution, d'où une efficacité du travail très réduite et, ici encore, une immobilisation prolongée des récipients.

De plus, l'emploi d'eau conduit à l'obtention d'émulsions le plus souvent irrécupérables au niveau du raffinage et dont on ne peut se débarrasser que par incinération si on ne veut pas encombrer d'autres capacités, d'où dévalorisation de ces produits.

C'est pourqoi, la demanderesse, soucieuse des difficultés que présentait ce problème de récupération des boues et de l'importance économique de leur valorisation tant au point de vue des conditions de travail que de la perte en matière première noble et des consommations d'énergie inutiles, a cherché et mis au point une composition et un procédé qui permettent de résoudre ce problème en se plaçant dans des conditions d'hygiène et de sécurité sensiblement améliorées, en utilisant l'énergie au strict minimum, en réduisant notablement les durées d'intervention et en valorisant ces boues de manière à ne pas être amené à encomer d'autres stockage ou à les détruire sans récupérer leur pouvoir énergétique.

En ce qui concerne la composition, il est connu par le document FR-A-2 211 546 d'utiliser pour dissoudre des résidus pétroliers un mélange de deux solvants halogénés l'un benzénique, l'autre naphthalénique auquel peut être inclus un agent désémulsifiant dérivé des amines à faible teneur d'oxyde d'éthylène.

On connait également par le document US-A-3 077 929 un procédé permettant le pompage d'un hydrocarbure et dans lequel on utilise des composés de l'ammonium quaternaire du type alkyl en solution alcoolique.

De même, dans le document US-A-3 102 100, il est décrit un procédé pour récupérer des produits pétroliers selon lequel on ajoute un alkylamine sur lequel ont été greffés des groupement oxyéthylés.

Suivant la présente invention; la composition est également réalisée au moyen d'un solvant formé d'un mélange de deux hydrocarbures dont un halogéné auquel on ajoute un agent désémulsifiant et qui est soit un dérivé des amines à faible teneur en oxyde d'éthylène, soit un composé de l'ammonium quaternaire.

Mais cette composition est caractérisé en ce que l'agent désémulsifiant appartient au groupe constitué, d'une part, par des propyldiamines à chaîne aliphatique R et sur lesquels ont été greffés des groupements oxyéthylés en nombre n, n', n'', tel que n+n'+n'' est compris entre 3 et 9, d'autre part, pas des composés de l'ammonium quaternaire du type aryl-alkyl à l'état de base ou de dérivés halogénés ou sulfocyanés.

Ainsi, à la différence de l'art antérieur constitué par le document FR-A-2 211 546 dans lequel on utilisait éventuellement une amine à faible teneur en oxyde d'éthylène, et par le document US-A-3 102 100 dans lequel on utilisait une alkylmonoamine sur laquelle étaient greffés des groupements

oxyéthylés mais sans employer de solvant halogéné, l'invention a recours nécessairement à un solvant et à des propyldiamines de formule générale

$$NH_2-CH_2-CH_2-CH_2-NH_2$$

sur lesquelles ont été greffés des groupement oxyéthylés et une chaîne aliphatique R pour donner un produit de formule

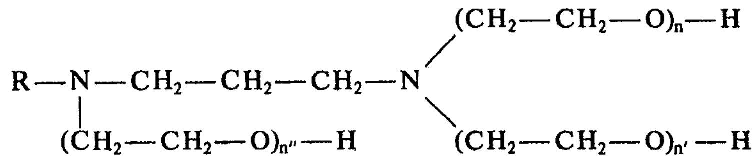

dans laquelle n + n' + n'' est compris entre 3 et 9 et de préférence 7 et où R comporte 12 et 18 atomes de carbone suivant une chaîne, soit saturée du type $R_2$: $CH_3-(CH_2)_2$ où $R_2$ comporte 18 atomes de carbone.

Plus précisément, cet agent peut contenir en poids:

5% d'amines où $R_1$ a 14 atomes de carbone,
30% d'amines où $R_1$ en a 16
45% d'amines où $R_1$ en a 18
20% d'amines où $R_2$ est en $C_{18}$.

En ce qui concerne l'agent désémulsifiant sous forme d'un composé de l'ammonium quaternaire, il se distingue de l'art antérieur constitué par l'US-A-3 077 929 en ce qu'il n'est pas du type alkyl mais du type aryl-alkyl et que de préférence ce n'est pas un composé chloré mais sulfocyané, de sorte que sa composition répond à la formule suivante:

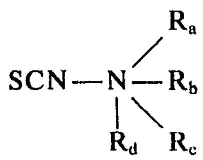

dans laquelle $R_a$ et $R_b$ sont des groupements méthyl $CH_3-$ et $R_c$ et $R_d$ sont des groupements benzyl $C_6H_5-CH_2-$.

Mais on peut utiliser aussi avec une bonne efficacité de désémulsification un dérivé sulfocyané dans lequel un des groupements benzyl est remplacé par un chaîne linéaire aliphatique comportant entre 1 et 18 atomes de carbone, l'efficacité étant d'autant meilleure que le nombre de carbone est grand; un dérivé ayant une chaîne où le nombre de carbone est compris entre 12 et 18 convient très bien.

Quant au solvant, on utilise:

- d'une part, au moins un hydrocarbure aliphatique comportant dans sa molécule entre 8 et 12 atomes de carbone, c'est-à-dire des corps dont la température d'ébullition sous pression atmosphérique est comprise entre 130 et 190° C. Ce choix fait en vue de limiter la tension de vapeur à un niveau suffisamment faible et d'éviter ainsi de créer dans les récipients des atmosphères explosives, sans pour autant prendre des hydrocarbures trop chargés en carbone qui conduiraient à des solutions plus difficiles à véhiculer. De préférence, 40% de ces corps comportant entre 9 et 11 atomes de carbone.
- d'autre part, d'au moins un hydrocarbure aromatique du type benzénique ou naphthalénique. Ces corps sont, de préférence, utilisés après avoir substitué dans leur molécule, un atome ou plusieurs atomes d'hydrogène par un ou plusieurs atomes d'éléments halogénés. De manière économique, on choisit généralement les dérivés chlorés. Ainsi, on peut recourir à la mise en oeuvre d'un mélange d'orthodichlorobenzène et de monochloronaphthalène dont les proportions pondérales peuvent être égales. Tous ces hydrocarbures aromatiques favorisent la dissolution des aromatiques contenus dans les boues et le choix qui est fait entre les différents corps possibles tient à l'obtention d'un optimum des propriétés solvantes.

En général, le solvant comprend en proportion pondérale entre 1/4 et 1/3 de ces hydrocarbures aromatiques et ce solvant représente environ 80 à 90% de la masse de la composition.

La composition, réalisée au moyen d'un solvant et d'un agent désémulsifiant et dispersant ainsi choisis a un pouvoir de dissolution élevé vis-à-vis des boues constituées le plus souvent d'hydrocarbures lourds et présente également la propriété de casser les émulsions qui peuvent se produire entre les produits gras et l'eau et qui sont la cause de la forte viscosité des boues; cela rend la suspension

obtenue plus fluide. De plus, elle a la propriété d'enrober les particules d'hydrocarbures et les particules solides et d'agir comme dispersant, c'est-à-dire de permettre aux particules solides en suspension dans le produit de la dissolution, de ne pas s'agglutiner. Cette composition, outre ses fonctions suivantes, désémulsifiantes et dispersantes, présente également l'avantage de n'avoir aucune action néfaste sur les catalyseurs utilisés dans l'industrie pétrolière et, donc, de permettre la valorisation des produit qui ont été soumis à son action.

La présente invention concerne également un procédé pour la mise en oeuvre de cette composition.

Ce procédé est caractérisé en ce que l'on dissout la composition à raison de 2 à 10% en poids dans un hydrocarbure, on projette sur les boues au moyen d'un dispositif adéquat la solution obtenue avec un débit de 20 m3/h à 150 m3/h sous une pression comprise entre 2 et 15 bars, en quantité représentant entre 5 et 100% du poids de la masse des boues à traiter; en ce que l'on recycle ladite solution qui se charge progressivement de ces boues au moyen de pompes, et en ce que l'on récupère par pompage le produit obtenu en vue de son traitement par le cycle normal et les installations habituelles de raffinage.

Le procédé consiste donc à dissoudre la composition décrite ci-dessus à raison de 2 à 10% en poids dans un hydrocarbure puis à projeter énergiquement la solution ainsi obtenue sur la masse de boues à fluidifier.

La mise en contact pourrait s'effectuer par simple agitation mécanique, mais le temps pour liquéfier la masse serait excessivement long et économiquement inexploitable. C'est pourqoui, il est préférable de projeter un fort volume instantané de solution sous une pression élevée par un ou plusieurs buses dirigées vers plusieurs points de la masse de boues à fluidifier, sous des incidences variables et ajustables. Un débit de 20 à 150 m3/heure sous une pression au moins égales à 2 bars et, de préférence, au moins égale à 5 bars et pouvant atteindre par exemple 15 bars, assure des résultats rapides et efficaces.

La séquence de projection est fonction de l'épaisseur des boues à traiter et de la forme ou de la grandeur du récipient qui les contient. C'est ainsi que les appareils de projection peuvent être installés verticalement ou horizontalement en divers points, en fonction de la prise d'aspiration de la pompe et/ou des ouvertures possibles du récipient à nettoyer.

L'action physico-chimique de la solution est généralement suffisante à la température ambiante, mais on peut également la préchauffer de 20° à 100° C pour accélérer l'opération.

Dans tous les cas, pour assurer la sécurité de l'opération contre des phases gazeuses explosives et se prémunir des conséquences de décharges électriques, l'enceinte est maintenue sous une faible pression de gaz inerte (azote ou dioxyde de carbone).

La proportion de solution par rapport au volume de boues à éliminer peut être comprise entre 5 et 100% et, de préférence, entre 10 et 30%. Elle est ajustée en fonction de la nature et de la consistance des boues. La solution, à mesure qu'elle désagrège et liquéfie les boues à fluidifier, est recyclée au moyen de pompes, mais sa viscosité reste faible et, en tous les cas, inférieure à 300 cst.

A la fin de l'opération, on évacue le produit formé et qui repose sur une couche d'eau qui s'est formée lorsque l'émulsion avec les produits pétroliers a été cassée et on le récupère en le réintroduisant dans un cycle de raffinage.

On peut achever le nettoyage du récipient par tout produit et procédé appropriés connus.

Comme les produits récupérés ont une faible viscosité, sont stables et anhydres, ils peuvent être dans d'autres récipients sans risque de gel ou de résédimentation, qui recréerait les problèmes de dépôts de boues que l'on cherche à combattre.

L'invention peut être illustrée au moyen des exemples d'application suivants:

## Exemple 1

En provenance d'une station de dégazage de navires, 2,5 tonnes de boues d'hydrocarbure, qui sont restées plusieurs années à ciel ouvert et contiennent une grande quantité d'eau en émulsion, sont traitées dans un récipient ouvert. A ces boues ayant la consistance du beurre, sont ajoutés 0,6 tonne de pétrole brut et 0,03 tonne de la composition selon l'invention dont les constituants sont dans les proportions pondérales suivantes:

- 63% d'hydrocarbures aliphatiques distillant entre 130 et 190° C sous la pression atmosphérique,
- 11,7% de monochloronaphthalène
- 13,3% d'orthodichlorobenzène
- 12% d'un sulfocyanate d'alkylaryl anmmonium de formule générale

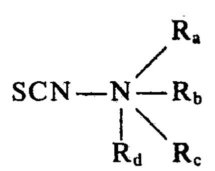

où $R_a = R_b = -CH_3$

$R_c = R_d = C_6H_5-CH_2-$

Une circulation de la phase liquide est établie avec, séparément et simultanément, deux pompes centrifuges dont une immergée. Celles-ci débitent dans le récipient par deux lances à incendie dirigées vers les résidus. La meilleure efficacité est donnée par une pression de 5 bars avec un débit de 40 m3/h à chaque lance. En trois heures, l'ensemble de la masse de boues est liquéfié. L'essai de pompage par une citerne sous vide s'effectue très facilement. Un échantillon de liquide gardé six mois conserve la même viscosité.

Exemple 2

On applique le procédé dans une raffinerie à un bac de stockage de 32 mètres de diamètre à toit flottant, qui contient 150 tonnes de boues de pétrole brut. Le bac est maintenu sous une faible pression d'azote.

Deux canons mobiles installés sur les trous d'homme du bac sont alimentés par une pompe et projettent chacun un débit de 65 m3/h sous 10 bars de pression.

On introduit dans le bac une solution contenant 40 tonnes de gaz-oil et 1,5 tonne de la composition suivante qui contient en proportions pondérales:

- 60% d'hydrocarbures aliphatiques distillant entre 130 et 190° C sous la pression atmosphérique
- 12,1% de monochloronaphthalène
- 13,9% d'orthodichlorbenzène
- 14% d'un mélange de propyldiamines dans lesquelles n + n' + n'' = 7 et les chaînes aliphatiques R dans les proportions suivantes:
  - 5% d'amines où $R_1$ a 14 atomes de C
  - 30% d'amines où $R_1$ en a 16
  - 45% d'amines où $R_1$ en a 18
  - 20% d'amines où $R_2$ est en $C_{18}$

Après 35 heures de circulation, la solution projetée à température ambiante par les canons avait un point de figeage qui était passé de −30° C à +9° C, indiquant que le gaz-oil s'était chargé de produits paraffinés. Cette solution a été récupérée entièrement. A l'ouverture des trous d'homme du bac, il ne restait plus aucune trace de boues.

Exemple 3

Sur un bac de stockage de 72 m de diamètre à toit flottant qui contenait 5800 m³ de boues paraffinées d'hydrocarbures, on a appliqué le procédé selon l'invention par des températures extérieures avoisinant 0° C.

Pour éviter au maximum les déperditions d'azote, une étanchéité soignée des joints du toit avait été réalisée permettant de maintenir une surpression d'environ 5 millibar avec un débit constant d'azote de l'ordre de 200 Nm³ par jour. Un contrôle permanent d'atmosphère était assuré de manière à garantir l'absence d'oxygène.

Les moyens mis en oeuvre comportaient:

- une pompe centrifuge associée à une pompe à vide absorbant une puissance totale de 250 CV.
- cinq canons mobiles placés d'une part sur les orifices de trous d'homme du toit flottant, d'autre part sur les orifices de robe, chacun des canons débitait 120 m³/heure de solution sous une pression de 9 bar. Cette solution était constituée par une dissolution dans 5200 tonnes de pétrole brut de 105 tonnes de la composition suivante:
  - 60% d'hydrocarbures aliphatiques
  - 12,1% de monochloronaphthalène
  - 13,9% d'orthodichlorobenzène
  - 14% d'un mélange de propyldiamines dans lesquelles n + n' + n'' était à égal à 7 et les chaînes aliphatiques R dans les proportions suivantes:
    - 5% d'amines où $R_1$ a 14 atomes de C
    - 30% d'amines où $R_1$ en a 16
    - 45% d'amines où $R_1$ en a 18
    - 20% d'amines où $R_2$ est en $C_{18}$

L'opération a été effectuée en 7 étapes de 2 jours chacune, chaque étape comportant le premier jour un recyclage intensif de la solution mise en oeuvre pour dissoudre progressivement les boues, le deuxième jour un repompage des boues liquéfiées dans le bac pour les envoyer vers des installations de raffinage où elles étaient intégralement revalorisées.

La présente invention trouve son application dans la fludification et la valorisation des boues qui s'accumulent dans les récipients de stockage et de transport des produits pétroliers, qu'ils soient placés à terre ou sur des engins de transport terrestre ou maritime.

Elle peut être utilisée également dans les poches naturelles contenant des hydrocarbures visquex en appliquant les procédés connus d'extraction.

**Revendications**

1. Composition, permettant de récupérer et de valoriser les boues qui s'accumulent dans les récipients de stockage et de transport de produits pétroliers, contenant un solvant formé d'au moins un hydrocarbure aliphatique et d'au moins un hydrocarbure aromatique du type benzénique ou naphthalénique au moins monohalogéné et un agent démulsifiant et dispersant pouvant être un dérivé aminé oxyéthylé ou un composé de l'ammonium quaternaire, caractérisé en ce que cet agent appartient au groupe constitué, d'une part, par des propyldiamines sur lesquelles on été greffés des groupement oxyéthylés et une chaîne aliphatique symbolisée par R pour donner un produit de formule

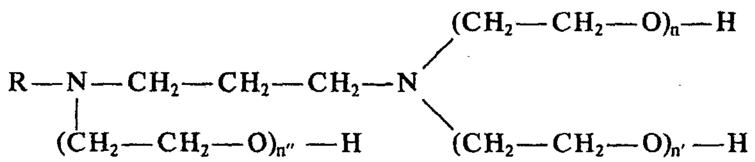

dans laquelle $n+n'+n''$ est compris entre 3 et 9, d'autre part, par les composés de l'ammonium quaternaire du type aryl-alkyl à l'état de base ou de dérivés halogéné ou sulfocyané.

2. Composition selon la revendication 1, caractérisée en ce que $n+n'+n''=7$.

3. Composition selon la revendication 1, caractérisée en ce que lorsque l'agent désémulsifiant et dispersant appartient au groupe des propyldiamines, R est une chaîne saturée comportant entre 12 et 18 atomes de carbones.

4. Composition selon la revendication 1, caractérisée en ce que lorsque l'agent désémulsifiant et dispersant appartient au groupe des propyldiamines, R est une chaîne monoethylénée comportant entre 12 et 18 atomes de carbone.

5. Composition selon la revendication 1, caractérisée en ce que lorsque l'agent désémulsifiant et dispersant appartient au groupe des composés de l'ammonium quaternaire à l'état de dérivé sulfocyané, il comporte deux groupements méthyl et deux groupement benzyl suivant la formule

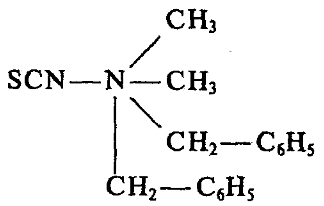

6. Composition selon la revendication 5, caractérisée en ce que l'un des groupement benzyl est remplacé par une chaîne aliphatique saturée.

7. Composition selon la revendication 6, caractérisée en ce que la chaîne aliphatique comporte entre 1 et 18 atomes de carbone.

8. Composition selon la revendication 1, caractérisée en ce que la proportion pondérale d'hydrocarbures aromatiques dans le solvant est comprise entre 1/4 et 1/3 et que ce solvant représente 80 à 90% en poids de la composition.

9. Procédé de mise en oeuvre de la composition suivant la revendication 1, caractérisée en ce que l'on dissout la composition à raison de 2 à 10% en poids dans un hydrocarbure, on projette sur les boues au moyen d'un dispositif adéquat la solution obtenue avec un débit de 20 $m^3/h$ sous une pression comprise entre 2 et 15 bars en quantité représentant entre 5 et 100% du poids de la masse des boues à traiter, en ce que l'on recycle ladite qui se charge progressivement de ces boues au moyen de pompes et en ce que l'on récupère, par pompage, le produit obtenu en vue de son traitement par le cycle normal et les installations habituelles de raffinage.

10. Procédé de mise en oeuvre de la composition suivant la revendication 9, caractérisé en ce que l'on opère dans les conditions de sécurité requises, notamment sous atmosphère inerte et anti-explosive.

**Patentansprüche**

1. Zusammensetzung zum Zurückgewinnen und Valorisieren der Schlämme, die sich in den Aufbewahrungs- und Transportbehältern der Erdölprodukte ansammeln, mit einem Gehalt an einem Lösungsmittel aus mindestens einem aliphatischen Kohlenwasserstoff und mindestens einem aromatischen Benzol-Kohlenstoffwasserstoff oder Naphthalin-Kohlenwasserstoff mit mindestens einem Halogenatom und an einem Entemulgier- und Dispergiermittel aus einem Ethoxyamin-Derivat oder einer quaternären Ammoniumverbindung, dadurch gekennzeichnet, daß das Mittel entweder ein Propyldiamin ist, das mit Ethoxygruppen und einer aliphatischen Kette R zu einem Produkt der Formel substituiert ist,

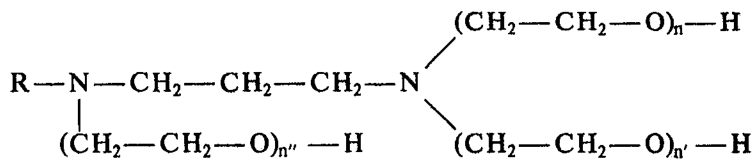

in der n + n' + n" von 3 bis 9 beträgt, oder eine quartäre Aryl-alkylammoniumbase oder deren Halogenderivat oder Rhodanid ist.

2. Zusammensetzung nach Anspruch 1, dadurch gekennzeichnet, daß n + n' + n" = 7.

3. Zusammensetzung nach Anspruch 1, dadurch gekennzeichnet, daß, wenn das Entemulgier- und Dispergiermittel ein Propyldiamin ist, R eine gesättigte Kette mit von 12 bis 18 Kohlenstoffatomen ist.

4. Zusammensetzung nach Anspruch 1, dadurch gekennzeichnet, daß wenn das Entemulgier- und Dispergiermittel ein Propyldiamin ist, R eine Monoethylenkette mit von 12 bis 18 Kohlenstoffatomen ist.

5. Zusammensetzung nach Anspruch 1, dadurch gekennzeichnet, daß, wenn das Entemulgier- und Dispergiermittel ein quartäres Ammoniumrhodanid ist, es zwei Methyl- und zwei Benzylgruppen gemäß der Formel

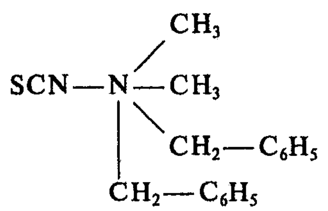

enthält.

6. Zusammensetzung nach Anspruch 5, dadurch gekennzeichnet, daß eine der Benzylgruppen durch eine gesättigte aliphatische Kette ersetzt ist.

7. Zusammensetzung nach Anspruch 6, dadurch gekennzeichnet, daß die aliphatische Kette von 1 bis 18 Kohlenstoffatome hat.

8. Zusammensetzung nach Anspruch 1, dadurch gekennzeichnet, daß das Gewichtsverhältnis der aromatischen Kohlenwasserstoffe im Lösungsmittel von 1 : 4 bis 1 : 3 beträgt und daß dieses Lösungsmittel 80 bis 90 Gew.-% der Zusammensetzung ausmacht.

9. Verfahren zum Zurückgewinnen und Valorisieren der Schlämme, die sich in den Aufbewahrungs- und Transportbehältern der Erdölprodukte ansammeln, dadurch gekennzeichnet, daß man die Zusammensetzung gemäß Anspruch 1 in einer Menge von 2 bis 10 Gew.-% in einem Kohlenwasserstoff löst, die erhaltene Lösung mit einer geeigneten Vorrichtung auf die Schlämme mit einer Geschwindigkeit von 20 bis 150 $m^3/h$, einem Druck von 2 bis 15 bar und in einer Menge entsprechend 5 bis 100 Gew.-% der zu behandelnden Schlammasse aufbringt, die sich fortschreitend mit diesen Schlämmen belädt, mittels Pumpen zurückführt und durch Pumpen das erhaltene Produkt in bezug auf seine Behandlung im normalen Zyklus und den gewohnten Raffiniereinrichtungen zurückgewinnt.

10. Verfahren nach Anspruch 9, dadurch gekennzeichnet, daß man unter den geforderten Sicherheitsbedingungen, wie inerte und antiexplosive Atmosphäre, arbeitet.

**Claims**

1. A composition for recovering and upgrading sludges which accumulate in vessels for storing and transporting petroleum products, containing a solvent formed by at least one aliphatic hydrocarbon and at least one aromatic hydrocarbon of the benzene or naphtalene type, which is at least monohalogenated, and a demulsifying and dispersing agent which can be an oxyethylated amino derivative or a compound of quaternary ammonium, characterised in that said agent belongs to the group formes on the one hand by propyl diamines on which there have been grafted oxyethylated groups, and an aliphatic chain denoted by R, to give a product having the following formula:

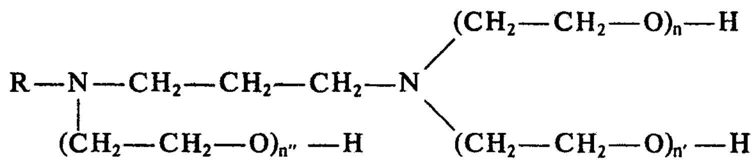

and in which n+n'+n" is from 3 to 9, on the other hand compounds of quaternary ammonium, of the alkyl-aryl type, in the form or a base or halogenated or thiocyano derivatives.

2. A composition according to claim 1 characterised in that n+n'+n"=7.

3. A composition according to claim 1 characterised in that, when the demulsifying an dispersing agent belongs to the group of propyldiamines, R is a satured chain containing from 12 to 8 carbon atoms.

4. A composition according to claim 1 characterised in that, when the demulsifying and disperging agent belongs to the group of propyldiamines, R is a monoethylenated chain containing from 12 to 18 carbon atoms.

5. A composition according to claim 1 characterised in that, when the demulsifying and dispersing agent belongs to the group of compounds of quaternary ammonium in the form of thiocyano derivative, it comprises two methyl groups and two benzyl groups, in accordance with the formula:

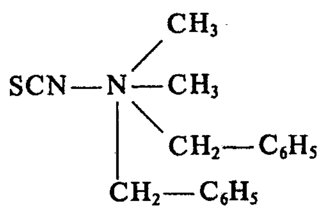

6. A composition according to claim 5 characterised in that one of the benzyl groups is replaced by a satured aliphatic chain.

7. A composition according to claim 6 characterised in that the aliphatic chain comprises from 1 to 18 carbon atoms.

8. A composition according to claim 1 characterised in that the proportion by weight of aromatic hydrocarbons in the solvent is from 1/4 to 1/3 and that said solvent represents from 80 to 90% weight of the composition.

9. A process for using the composition according to claim 1 characterised in that the composition is dissolved in a proportion of from 2 to 10% by weight in a hydrocarbon, the resulting solution is projected on to the sludges by means of a suitable apparatus, at a rate of 20 $m^3$/hour to 150 $m^3$/hour, at a pressure of from 2 to 15 bars, in an amount representing from 5 to 100% by weight of the mass of the sludges to be treated, that said solution which progressively becomes charged with said sludges is recycled by means of pumps, and that the resulting product is recovered by pumping for treatment thereof by the normal refining cycle and usueal refining equipment.

10. A process for using the composition according to claim 9 characterised in that operation is under the required safety conditions, in particular in an inert and anti-expolosive atmosphere.